Europäisches Patentamt

European Patent Office

Office européen des brevets

(11) Veröffentlichungsnummer: **0 390 019**
**A2**

## (12) EUROPÄISCHE PATENTANMELDUNG

(21) Anmeldenummer: 90105685.3

(22) Anmeldetag: 26.03.90

(51) Int. Cl.⁵: **C08L 53/02, C08K 5/20,**
**//(C08L53/02,25:06)**

(30) Priorität: 30.03.89 DE 3910259

(43) Veröffentlichungstag der Anmeldung:
**03.10.90 Patentblatt 90/40**

(84) Benannte Vertragsstaaten:
**BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Pohrt, Juergen, Dr.**
**Carolus-Vocke-Ring 72**
**D-6800 Mannheim 51(DE)**
Erfinder: **Jenne, Helmut, Dr.**
**Grosser Moench 6**
**D-6905 Schriesheim(DE)**
Erfinder: **Walter, Hans-Michael, Dr.**
**Am Mandelgarten 11**
**D-6713 Freinsheim(DE)**
Erfinder: **Gausepohl, Hermann, Dr.**
**Neuweg 10**
**D-6704 Mutterstadt(DE)**
Erfinder: **Benedix, Franz**
**Autharistrasse 44**
**D-6701 Otterstadt(DE)**

(54) **Antiblockend ausgerüstete thermoplastische Formmasse, Verfahren zu ihrer Herstellung und ihre Verwendung.**

(57) Antiblockend ausgerüstete thermoplastische Formmasse aus einem mit üblichen Hilfsstoffen versehenen nichtelastomeren, anionisch polymerisierten und sternförmig verzweigten Blockcopolymerisat A aus 60 bis 95 Gew.-% Styrol ($a_1$) und 5 bis 40 Gew.-% mindestens eines konjugierten Diens ($a_2$) mit 4 oder 5 C-Atomen und bis zu 25 Gew.-% eines Standardpolystyrols B einer VZ von 70 bis 85 ($cm^3/g$), die einen Hilfsstoff C, nämlich jeweils 0,01 bis 0,15 Gew.-% Stearinsäureamid und Erucasäureamid enthält.

EP 0 390 019 A2

## Antiblockend ausgerüstete thermoplastische Formmasse, Verfahren zu ihrer Herstellung und ihre Verwendung

Die Erfindung betrifft eine antiblockend ausgerüstete thermoplastische Formmasse aus einem nichtelastomeren, sternförmig verzweigten Blockcopolymerisat und einem Antiblockmittel. Unter Blocken wird das Aneinanderhaften von Formkörpern aus thermoplastischen Polymeren verstanden. Der Begriff "Blockcopolymerisate" hat jedoch damit nichts zu tun.

Die Verarbeitung von Blockcopolymerisaten, ihre besondere Problematik und Maßnahmen, die in diesem Zusammengang von Bedeutung sind, sind z.B. in den nachstehenden Druckschriften abgehandelt:

1) EP-A1-88960
2) EP-A1-113 019
3) EP-A1-153 727
4) US-PS 4 112 158
5) US-PS 4 663 212
6) US-PS 4 666 549
7) DE-A-26 41 190.

Daraus ergibt sich folgendes:

Styrol-Dien-Blockcopolymere weisen allgemein die Neigung zum eigentlichen Blocken (Haften untereinander) und zum Kleben an anderen Werkstoffen auf.

Beispiele für das Kleben sind das Haften an metallischen Elementen, z.B. an Schnecke und Düse beim Extrudieren oder Werkzeug beim Spritzgießen; das Blocken andererseits tritt im Folienwickel bei der Breitschlitzextrusion, an Schlauchfolien nach der Zusammenlegung oder bei Tiefziehteilen nach dem Aufeinanderstapeln auf und ist eine besonders lästige Eigenschaft der genannten Polymeren.

In (3), (4) und (5) sind Verfahren zur Verbesserung der Kratzfestigkeit, Bedruckbarkeit und Verbindungsfähigkeit von Blockcopolymeren bei Antiblockausrüstung mit mikrokristallinen Wachsen beschrieben. In (2) werden Formmassen vorgestellt aus einem Blockcopolymerisat, Polystyrol und einem Gehalt an Schmiermitteln, die glänzend und transparent sind.

In (1) ist die Verwendung von schlagfestem Polystyrol zur Antiblockausrüstung von sternförmig verzweigten Blockcopolymerisaten beschrieben.

Die bekannten Mittel zur Antiblockausrüstung beeinflussen die Transparenz der Formkörper negativ, sodaß nur ein relativ geringer Anteil dieser Hilfsstoffe eingesetzt werden kann, wenn es auf Transparenz ankommt.

Die Transparenzbeeinflussung bedeutet verminderte Lichtdurchlässigkeit insbesondere bei der Herstellung dickwandigerer Formkörper (> 3 mm) aus Blockcopolymerisat bzw. bei Formkörpern aus Mischungen aus Blockcopolymerisat und Standardpolystyrol. Sie tritt bei allen üblichen Ausrüstungen auf, zu denen z.B. Amide der Stearinsäure und der Erucasäure gehören.

Aufgabe der Erfindung ist die Schaffung einer Antiblockausrüstung mit höherer Wirksamkeit ohne die bislang bestehende Nebenerscheinung eines zugleich höheren Transparenzverlusts.

Die Erfindung betrifft eine antiblockend ausgerüstete thermoplastische Formmasse aus bis zu 99,98 Gew.-% eines mit üblichen Hilfsstoffen versehenen, nichtelastomeren, sternförmig verzweigten Blockcopolymerisats A aus 60 bis 95 Gew.-% einpolymerisierten Einheiten des Styrols ($a_1$) und 5 bis 40 Gew.-% einpolymerisierten Einheiten eines konjugierten Diens ($a_2$) mit 4 oder 5 C-Atomen, das in an sich bekannter Weise durch sequentielle anionische Polymerisation der Monomeren $a_1$ und $a_2$ mittels einer lithiumorganischen Verbindung als Initiator und in Gegenwart eines Lösungsmittels unter anschließender Kopplung hergestellt ist und bis zu 25 Gew.-% (bezogen auf die Formmasse) eines relativ niedermolekularen Homopolystyrols B, z.B. einer VZ von 70 bis 85 ($cm^3$/g), die erfindungsgemäß als Hilfsstoff C Antiblockmittel, nämlich jeweils 0,01 bis 0,15 Gew.-% Stearinsäureamid und Erucasäureamid enthält. Vorzugsweise enthält die Formmasse außerdem noch bis zu 0.15 Gew.-% Acrawachs (Ethylen-bis-stearyl-amid) mit der Maßgabe, daß die Gesamtmenge an Hilfsstoffen C bis zu 0.4 Gew.-%, vorzugsweise bis zu 0.3 Gew.-%, betragen kann.

Bei der Verarbeitung des Polymerisats A mit sowohl Stearinsäureamid als auch Erucasäureamid durch Breitschlitzextrusion zeigt sich gegenüber der Verarbeitung mit jeweils einzelnen Hilfsstoffen ein deutlicher Gewinn an Transparenz. Zugleich sind die daraus hergestellten Folien blockfrei, die daraus tiefgezogenen Formteile leicht zu entstapeln und zudem - mit oder ohne Standard-Polystyrol - merklich kratzfester als ohne diesen zusatz. Bedrucken ist ebenfalls möglich.

Die Verarbeitung erfindungsgemäßer Formmassen mit einem Polybutadienanteil von über 25 % führt bei der Plattenextrusion (Dicke mehr als 3 mm) zu deutlich höherer Transparenz. Die daraus hergestellten Platten sind nunmehr auch ohne Gefahr des Verklebens aufeinander zu stapeln und merklich kratzfester.

Überraschend ist der Gewinn an Transparenz im Vergleich zu den bisher verwendeten Antiblockmitteln (z.B. Acrawachs allein).

Diese Verbesserung erstreckt sich auf die Blockfreiheit von Folienwickeln, die bessere Entstapelungsfähigkeit von Tiefziehteilen und Platten sowie die bessere Entformbarkeit von Spritzgußteilen im Vergleich zur herkömmlichen Ausrüstung.

Die erfindungsgemäße Formmasse enthält die Komponenten A und C. Sie kann auch aus diesen bestehen. Während oder nach der Herstellung der Formmassen kann die Komponente B zugesetzt werden. Schließlich kann die Formmasse übliche sonstige Zusatzstoffe aufweisen.

Bevorzugt enthält eine erfindungsgemäße Formmasse - bezogen auf A + C -

99.3 bis 99,98 Gew.-%, insbesondere 99.80 bis 99,85 Gew.-% Blockcopolymerisat A und jeweils 0,01 bis 0,15 Gew.-%, vorzugsweise 0,05 bis 0,08 Gew.-%, Stearinsäureamid und Erucasäureamid (C).

Bezogen auf 100 Gewichtsteile A + C können z.B. 0,1 bis 10 Gew.-Teile, vorzugsweise 0,2 bis 5 Gew.-Teile B (Standardpolystyrol) zugegen sein.


Komponente A


Als Komponente A kommen bekannte nichtelastomere, sternförmig verzweigte Blockcopolymerisate in Betracht, die durch sequentielle anionische Polymerisation mittels mindestens einer lithiumorganischen Verbindung als Initiator und in Gegenwart eines Lösungsmittels unter anschließender Kopplung hergestellt sind.

Die Blockpolymerisate A liegen vielfach als Handelsprodukte vor; in diesem Falle enthalten sie bereits Hilfsmittel, wie sie nachstehend unter D aufgeführt werden und häufig eine geringe Menge Standardpolystyrol als Verarbeitungshilfsmittel.

Die Blockcopolymerisate A enthalten z.B., bezogen auf das Blockcopolymere A, 65 bis 90 Gew.-% Styrol und 35 bis 10 Gew.-% eines konjugierten Diens, insbesondere Butadien und/oder Isopren. Die Viskositätszahl als Maß für das Molgewicht der polymodalen Sternblockcopolymerisate liegt im Bereich von 65 bis 110 ml/g, vorzugsweise 70 bis 85 cm³/g (gemessen 0,5 %ig in Toluol bei 23 °C). Bevorzugt werden polymodale (unsymmetrische) stern förmig verzweigte Blockcopolymerisate, wie sie nach den DE-OSen 19 59 922, 25 50 266, DE-OS 25 50 267 und 37 38 748 hergestellt werden können. Besonders bevorzugt ist ein Produkt, das nach der DE-OS 25 50 267 hergestellt wird, auf die anstelle einer besonderen Beschreibung Bezug genommen wird.

Dieses Standardpolystyrol ist i.a. ein relativ niedermolekulares Polystyrol, wie es auch nachstehend unter B beschrieben wird.


Komponente B


Die erfindungsgemäße Formmasse kann - neben sonstigen polymeren Mischungspartnern (vgl. E) - insbesondere für bestimmte Verarbeitungsgeräte, ein niedermolekulares Polystyrol, z.B. mit einer Viskositätszahl im Bereich von 70 bis 85 cm³/g enthalten. Dies wird insbesondere bei der Extruderverarbeitung, z.B. in einer Menge von bis zu 5 oder bis zu 10 Gew.-% angewendet. Komponente B kann aber auch dazu dienen, Hilfsmittel und besonders z.B. Bestandteile von Komponente C in die Formmasse einzubringen. In diesem Fall kann Komponente B teils mit Komponente A, teils mit Komponente C gemeinsam eingebracht werden, sodaß sich u.U. ein Gesamtgehalt an B von über 10 Gew.-%, z.B. erfindungsgemäß bis 25 Gew.-% ergibt.


Komponente C


Als Antiblockmittel wird erfindungsgemäß sowohl stearinsäureamid als auch Erucasäureamid verwendet. Erucasäureamid ist im wesentlichen eine Mischung von Mono- und Diolefincarbonsäuren mit 22 C-Atomen. Im Handel ist z.B. ein Produkt ®Crodamid der Firma Croda GmbH, 4054 Nettetal 2. Ferner - und zwar zusätzlich - kann Acrawachs (Ethylen-bis-stearylamid) verwendet werden. Komponente C kann den übrigen Bestandteilen für sich (was wegen der geringen Menge nicht so günstig ist) oder in Form einer Vormischung (Masterbatch), z.B. mit B zugesetzt werden.

Komponenten D, E

Die erfindungsgemäße Formmasse kann, insbesondere für bestimmte Anwendungsbereiche, weitere übliche Zusatzstoffe, wie Stabilisatoren, Gleitmittel, Flammschutzmittel und, wenn auf Transparenz kein Wert gelegt wird, auch Füllstoffe, Farbstoffe, Pigmente etc. (Komponente D) enthalten und kann auch mit anderen Thermoplasten, z.B. PPE, Polycarbonat etc. (Komponente E) abgemischt werden.

Besonders bevorzugt ist die Abmischung mit bis zu 500 Gew.-Teilen Standardpolystyrol, etwa der VZ 85 bis 110 cm$^3$/g, bezogen auf 100 Gew.-Teile der erfindungsgemäßen Mischung, zur Herstellung transparenter und schlagfester Mischungen.

Herstellung der erfindungsgemäßen Formmasse

Die erfindungsgemäße Formmasse kann wie üblich in Trommelmischern, Brabender-Mischern, Extrudern, Walzen etc. durch Mischen von Granulaten der Komponente A und gegebenenfalls B mit der Komponente C hergestellt werden. Dabei verwendet man zweckmäßig Granulate A, die die üblichen Hilfsstoffe enthalten; solche Granulate sind handelsüblich. Es ist auch möglich, Lösungen von A und C unmittelbar nach der anionischen Polymerisation zu mischen und danach unter üblicher Entfernung des Lösungsmittels die Mischung aufzuarbeiten, z.B. durch Entgasung unter vermindertem Druck und bei erhöhter Temperatur. Bevorzugt ist das Mischen von A mit B, dem vorher C in entsprechender Menge zugesetzt war.

Die in den Beispielen und Vergleichsversuchen beschriebenen Parameter wurden wie folgt bestimmt.

1. Viskositätszahl, VZ, in [ml/g] nach DIN 53 726 bei 23° C.

2. Die Transparenz, Tr, in [%] wurde an 2 mm starken, spritzgegossenen Rundschreiben mit Hilfe eines Lange-Reflektometers mit Universalmeßeinheit UME 3, Meßkopf LT12 und Grünfilter VG9 bei senkrechter Bestrahlung bestimmt.

3. Die oberflächenwirksamkeit der Gleitmittelausrüstung, von der direkt die Blockfreiheit, die Entstapelungsfähigkeit sowie die Verminderung der Kratzempfindlichkeit abhängt, wird auf indirektem Weg durch Messung des Gleitverhaltens bestimmt. Das Gleitverhalten wird beschrieben durch die Zugkraft, die bei linearer Bewegung eines Gleitkörpers über die Probekörperfläche hinweg aufgebracht werden muß, um den Gleitkörper bei gleichzeitig kontinuierlich steigender Gewichtskraft über die Oberfläche zu ziehen. Diese Meßtechnik entspricht prinzipiell der Verfahrensweise zur Bestimmung von Gleitreibungskoeffizienten; geeignete Vorrichtungen zur Bestimmung von Gleitreibungskoeffizienten ebener Flächen sind bekannt.

Für die nachfolgenden Beispiele wurde eine Eigenkonstruktion verwendet, mit handelsüblichen Bauelementen für die elektronische Regelung des Vorschubs und der Kraftmessung. Der mechanische Teil ist in der Abbildung 1 dargestellt. Der eingesetzte Gleitkörper hat die Form einer Nadel mit abgerundeter Stirnfläche von 1 mm Radius. In dieser Dimensionierung ist er zugleich ausgelegt für eine Bewertung verbleibender Spuren der Oberflächenbeschädigung.

Die graphische Aufzeichnung der Gleitkraft über dem Gleitweg bei kontinuierlich steigender Gewichtsbelastung ergibt bei der Messung jeweils mehrerer Probekörper eine Bandbreite von Gleitreibungsdiagrammen, deren Verlauf als Regressionskurve auf eine dem jeweiligen Oberflächenverhalten entsprechenden Koeffizienten hinführt. Daraus lassen sich für tabellarische zwecke Vergleichszahlen gewinnen, beispielsweise durch Bestimmung der Zugkräfte bei 300 mm Gleitweg. Diese kennzeichnen im Verhältnis zueinander die Oberflächenwirksamkeit der Gleitmittelausrüstung.

Es werden Mischungen durch einen Extruder mittels einer Ringdüse zu Schlauchfolien verarbeitet. Das Flachlegen der Schläuche durch ein Walzenpaar ergibt eine Doppelfolie, deren Blätter üblicherweise aneinander haften ("Blocken"). Die Haftung wird durch Messung der Zugkräfte quantifiziert, die zum Trennen der gegeneinanderliegenden Folienblätter erforderlich sind.

Die Schlauchfolien wurden mit einem Extruder mit einem Zylinderdurchmesser von 60 mm und einem L/D-Verhältnis von 25 (60/25 D) mit genuteter Einzugsbuchse hergestellt. Die Massetemperatur vor Eintritt in das Werkzeug lag zwischen 205 und 210° C.

Der Durchsatz betrug 96 kg/h bei einer Abziehgeschwindigkeit von ca. 14 m/min. Mit dem Aufblasverhältnis von 1 : 1,75 ergab sich eine Schlauchfoliendickke von 100 μm bis 120 μm je nach Mischung.

Aus den flachgelegten Schläuchen wurden quer zur Extrusionsrichtung doppeltliegende Probestreifen von 50 mm Breite herausgeschnitten. Diese Doppelstreifen wurden an einem Ende auseinandergefaltet, so daß zwei Schenkel zum Einspannen in die Klemmen einer Zugprüfmaschine gebildet wurden. Die Schenkellängen waren so bemessen, daß für den Teil des im Blockzustand belassenen Streifens eine Weglänge von 10 mm bis zur Mitte der Schlauchfolie vorgegeben war, um das dort zu erwartende Maximum der

4

Blockwirkung zu erfassen; die Seitenflächen der Schlauchfolie blocken erfahrungsgemäß durch Kompression der Luft nach außen während des Durchgangs der Folie durch die Walzen weniger stark.

Der Zugversuch erfolgte mit einer Klemmenabzugsgeschwindigkeit von 100 mm/min. Die Zugkräfte wurden über der Weglänge des sich öffnenden Streifens grafisch aufgezeichnet.

Für die Herstellung erfindungsgemäßer Formmassen und von Proben für Vergleichsversuche wurden die nachfolgend beschriebenen Produkte verwendet:

Komponente A

A1: Ein polymodales, sternförmigverzweigtes Butadien-Styrol-Blockcopolymerisat mit einem Styrolgehalt von 75 Gew.-% (Rest Butadien) das nach dem Verfahren der EP 0 046 862 hergestellt worden war und neben üblichen Hilfsmitteln (außer den Bestandteilen der Komponente C) etwa 10% Standardpolystyrol von der Art enthielt, wie es für Komponente B benötigt wird.

A2: Ein polymodales, sternförmig verzweigtes Butadien-Styrolblockcopolymerisat mit einem Styrolgehalt von 70 Gew.-% (Rest Butadien), das nach dem Verfahren der deutschen Offenlegungsschrift P 37 38 748 hergestellt worden und nachträglich mit den Zusätzen wie A1 versehen war.

Komponente B

B Polystyrol einer VZ von 85, z.B. Polystyrol 144 C, Handelsprodukt der Firma BASF AG

Komponente C

C1 Acrawachs

C2 Stearinsäureamid, Handelsprodukt Loxamid® S der Firma Henkel, Düsseldorf

C3 Erucasäureamid, Handelsprodukt Loxamid® E der Firma Henkel, Düsseldorf

C4 Mischung aus C2 + C3 im Verhältnis 1 : 1

Komponente D

Die Komponenten A1 und A2 enthalten jeweils Hilfsmittel D wie angegeben; z.B. werden verwendet: ein übliches sterisch gehindertes Phenol als Antioxydans, ein Costabilisator auf der Grundlage von Trisnonylphenylphosphit (TNPP) und ferner ein handelsübliches Weißöl (DAB9).

Komponente E

Die erfindungsgemäßen bzw. zu Vergleichsversuchen hergestellten Mischungen wurden weiter abgemischt mit einem handelsüblichen schlagzähen Polystyrol (HIPS) z.B. dem Produkt Polystyrol 475K der BASF.

Beispiele und Vergleichsversuche

Die Transparenz wurde an spritzgegossenen Testkästchen 50 × 50 × 100 mm mit 1,5 mm Wanddicke bestimmt, dabei wurden jeweils 0,2 d.h. Mengen der Komponenten C verwendet, die höher als die erfindungsgemäßen waren, um deren Einfluß festzustellen.

Es wurden zunächst Mischungen der Komponente A (A1 bzw. A2) mit den erfindungsgemäßen Einzelbestandteilen C untersucht; der Anteil der Gleitmittelkomponente C (C1 bzw. C3) war jeweils 0,2%.

Tabelle 1

| (Vergleichsversuch) | | |
|---|---|---|
| | Lichtdurchlässigkeit in % (Mittelwerte*) | |
| | C1 | C2 |
| A1 | 87,9 | 88,9 |
| A2 | 89,0 | 89,9 |

* Für die angegebenen Mittelwerte gilt allgemein ein Vertrauensbereich von + 0,4 %

Es wurden Vergleichsmischungen und eine erfindungsgemäße Mischung jeweils mit Standardpolystyrol (Komponente E) untersucht; das Ergebnis zeigt die nachstehende Tabelle 2; der Anteil der Gleitmittelkomponente C war jeweils 0,2%

Tabelle 2

| (Vergleichsversuche und erfindungsgemäßes Beispiel) | | | | |
|---|---|---|---|---|
| | Lichtdurchlässigkeit in % | | | |
| | C1 | C2 | C3 | C4 |
| 50 % A1 + 50 % E | 84,6 | 85,4 | 85,0 | 85,1 |
| 25 % A1 + 75 % E | 82,1 | 83,3 | 83,5 | 83,5 |

In der vorstehenden Tabelle 2 ist der Zusatz C4 (Mischung aus C2 + C3) erfindungsgemäß.

Bestimmung der Transparenz an extrudierter Platte von 4 mm Dicke; es wurden Vergleichsversuche zunächst an Mischungen mit je 0,2% der Einzelkomponenten angestellt; das Ergebnis zeigt Tabelle 3

Tabelle 3

| | Lichtdurchlässigkeit in % | |
|---|---|---|
| | $C_1$ | $C_3$ |
| A1 | 65,4 | 81,0 |

Untersuchungen des Gleitverhaltens durch Ermittlung der relativen Gleitreibungswerte; die angegebenen Zugkräfte beziehen sich auf den Wert für die unveränderte Komponente $A_1$ = 100 %. Das Ergebnis zeigt die nachstehende Tabelle 4; der Anteil an C betrug wieder jeweils 0.2%.

Tabelle 4

| | Verhältniszahl des Gleitreibungswerts in % | | | |
|---|---|---|---|---|
| | C1 | C2 | C3 | C4 |
| Formmasse aus 50 % A und 50 % | 100 | 44 | 63 | 56 |

In Tabelle 4 ist die Mischung mit C4 erfindungsgemäß

## Ansprüche

Antiblockend ausgerüstete thermoplastische Formmasse aus einem mit üblichen Hilfsstoffen versehenen nichtelastomeren, sternförmig verzweigten Blockcopolymerisat A aus 60 bis 95 Gew.-% Styrol ($a_1$) und 5 bis 40 Gew.-% mindestens eines konjugierten Diens ($a_2$) mit 4 oder 5 C-Atomen, das in an sich bekannter Weise durch sequentielle anionische Polymerisation der Monomeren $a_1$ und $a_2$ mittels einer lithiumorganischen Verbindung als Initiator und in Gegenwart eines Lösungsmittels unter anschließender Kopplung hergestellt ist, und bis zu 25 Gew.-% eines Standardpolystyrols B einer VZ von 70 bis 85 ($cm^3$/g), die als einen Hilfsstoff C ein oder mehrere Antiblockmittel enthält, dadurch gekennzeichnet, daß als Antiblockmittel C jeweils 0,01 bis 0,15 Gew.-% Stearinsäureamid und Erucasäureamid vorhanden ist.